# EUROPEAN PATENT APPLICATION

(11) **EP 3 524 105 A1**
(43) Date of publication of application: **14.08.2019**
(21) Application number: 19153333.0
(22) Date of filing: 23.01.2019
(51) Int. Cl.: A47J 37/06

(54) **BURN-PREVENTING GRILL UNIT AND A GRILL DEVICE HAVING THE SAME**

(30) Priority: 12.02.2018 CN 201820252119 U
(71) Applicant: Tsann Kuen (Zhangzhou) Enterprise Co., Ltd., Fujian 363107 (CN)
(72) Inventor: Li, Chunhua, Zhangzhou, Fujian 363107 (CN); Wu, Qinghui, Zhangzhou, Fujian 363107 (CN)
(74) Representative: V.O.

(57) **Abstract**

A burn-preventing grill unit (2) includes a grill plate (21), an inner casing (22) that is disposed on the grill plate (21), and an outer casing (23) that is disposed on the inner casing (22) . The grill plate (21) and the outer casing (23) are separated by the inner casing (22) and not in direct contact. A grill device including a grill base (1) and the burn-preventing grill unit (2) that is connected pivotally to the grill base (1) is also provided.

## Description

The disclosure relates to a grill device, more particularly to a grill device having a burn-preventing grill unit.

A grilling device can be used for grilling steaks, pork chops, etc. Food cooked with the grilling device will emit a special aroma and has a grilled texture, a special combination that many love. However, after the grill is used, the surface temperature of the outer casing will rise. If the temperature rises too fast and is too high, when a user accidentally touches the outer casing, burns may be caused. As safety regulations are becoming stricter in various countries, it is therefore important to improve the structure of conventional grills to avoid having overly hot outer casings after use.

Therefore, an object of the disclosure is to provide a burn-preventing grill unit that is adapted for use in a grill device and that can alleviate the drawback of the prior art. The burn-preventing grill unit includes a grill plate, an inner casing that is disposed on the grill plate, and an outer casing that is disposed on the inner casing. The grill plate and the outer casing are separated by the inner casing and not in direct contact.

Another object of the disclosure is to provide the grill device including a grill base and the abovementioned burn-preventing grill unit that is connected pivotally to the grill base.

Other features and advantages of the disclosure will become apparent in the following detailed description of the embodiments with reference to the accompanying drawings, of which:
FIG. 1 is a perspective view of a first embodiment of a grill device according to the disclosure;
FIG. 2 is a sectional view of the first embodiment;
FIG. 3 is a fragmentary enlarged sectional view of FIG. 2; and
FIG. 4 is a fragmentary enlarged sectional view of a second embodiment of a grill device according to the disclosure.

Before the present invention is described in greater detail, it should be noted that where considered appropriate, reference numerals or terminal portions of reference numerals have been repeated among the figures to indicate corresponding or analogous elements, which may optionally have similar characteristics.

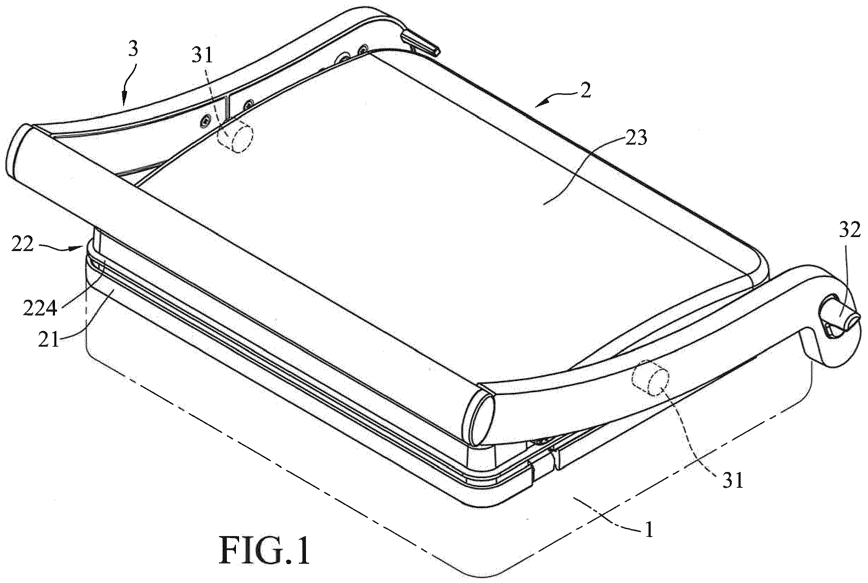

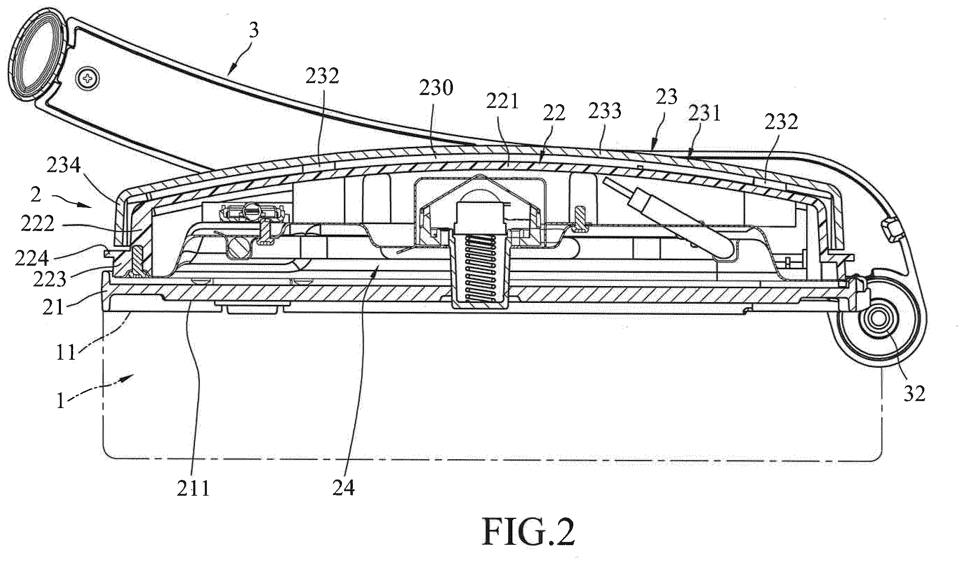

Referring to FIGS. 1, 2 and 3, a first embodiment of a grill device according to the disclosure includes a grill base 1, a burn-preventing grill unit 2 and a handle 3.

The grill base 1 includes a first grill surface 11 facing up and adapted to receive food thereupon. The grill base 1 is not an area of improvement for the disclosure and will not be further discussed for the sake of brevity.

The burn-preventing grill unit 2 is connected pivotally to the grill base 1 through the handle 3, and is adapted to grill food cooperatively with the grill base 1. The burn-preventing grill unit 2 includes a grill plate 21, an inner casing disposed on the grill plate 21, an outer casing 23 disposed on the inner casing 22, and a heating unit 24 disposed between the inner casing 22 and the grill plate 21 and adapted to heat the grill plate 21. The grill plate 21 and the outer casing 23 are separated by the inner casing 22 and are not in direct contact.

In particular, the grill plate 21 has a downward-facing second grill surface 211 adapted to grill food cooperatively with the first grill surface 11. The inner casing 22 may be made of, but is not limited to, Bakelite, and includes a first top wall 221 spaced apart from and disposed above the grill plate 21, a first surrounding wall 222 extending downwards from a periphery of the first top wall 221, a barrier wall 223 extending outwards from the first surrounding wall 222 and interposing between the grill plate 21 and the outer casing 23, and a heat-blocking rib 224 extending outwards from the barrier wall 223.

The outer casing 23 includes an outer casing body 231 spaced apart from the inner casing 22. The outer casing body 231 includes a second top wall 233 disposed above the first top wall 221 of the inner casing 22, and a second surrounding wall 234 extending downwards from a periphery of the second top wall 233 and surrounding the first surrounding wall 222 of the inner casing 22. The second surrounding wall 234 is disposed above the barrier wall 223 of the inner casing 22 and blocked by the barrier wall 223 from direct contact with the grill plate 21. The outer casing 23 further includes a plurality of supporting blocks 232 extending from the second top wall 233 of the outer casing body 231 and abutting against the inner casing 22, such that the outer casing body 231 and the inner casing 22 are not in direct contact with each other, and cooperatively form an air layer 230 therebetween.

The handle 3 has two first pivot members 31 disposed oppositely to each other and connected pivotally to the outer casing 23, and two second pivot members 32 disposed oppositely to each other and connected pivotally to the grill base 1. The handle 3 is operable to open or close the burn-preventing grill unit 2 relative to the grill base 1.

The inner casing 22 blocks heat radiating from the heating unit 24 and the grill plate 21. Further, the inner casing 22 separates the grill plate 21 from the outer casing 23, such that there is no direct contact between the grill plate 21 and the outer casing 23. Heat is prevented from transmitting to the outer casing 23 by thermal conduction and the outer casing 23 is prevented from overheating, improving the safety of the grill device. Moreover, the outer casing body 231 is not in direct contact with the inner casing 22, the two cooperatively defining the air layer 230 therebetween, reducing heat transfer by contact between the outer casing body 231 and the inner casing 22. Instead, the air layer 230 acts as a thermal insulator, slowing the transfer of heat to the outer casing 23 and preventing the temperature of the outer casing 23 from rising sharply. Air in the air layer 230 is in communication with air outside of the grill device and helps to dissipate heat.

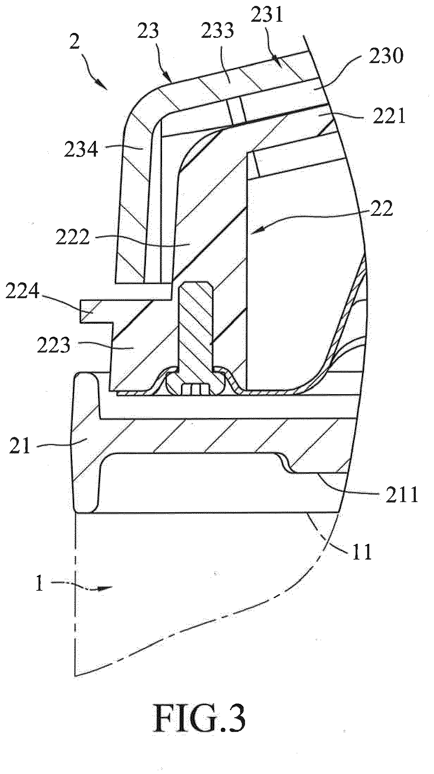

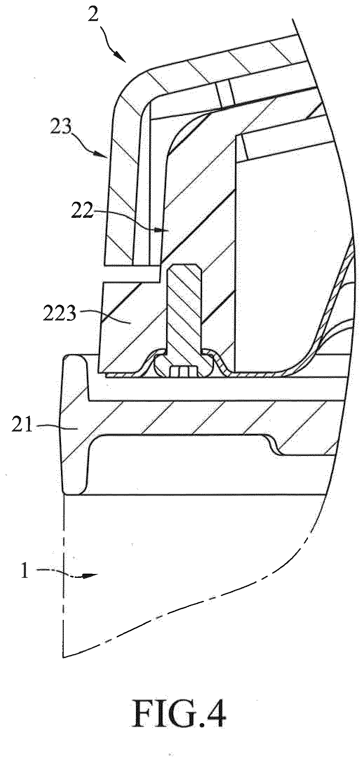

Referring to FIG. 4, a second embodiment of a grill device according to the disclosure has a structure similar to that of the first embodiment, the difference being that the inner casing 22 lacks the heat-blocking rib 224 (see FIG. 3) . The second embodiment has the same benefit as the first embodiment as the grill plate 21 and the outer casing 23 is still separated by the inner casing 22 and not in direct contact.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A burn-preventing grill unit (2) adapted for use in a grill device and including a grill plate (21), **characterized in that** said burn-preventing grill unit (2) further includes an inner casing (22) that is disposed on said grill plate (21), and an outer casing (23) that is disposed on said inner casing (22), said grill plate (21) and said outer casing (23) being separated by said inner casing (22) and not in direct contact.

2. The burn-preventing grill unit (2) as claimed in claim 1, further **characterized in that** said inner casing (22) includes a first top wall (221), a first surrounding wall (222) extending downwards from a periphery of said first top wall (221), and a barrier wall (223) extending outwards from said first surrounding wall (222) and interposing between said grill plate (21) and said outer casing (23).

3. The burn-preventing grill unit (2) as claimed in claim 2, further **characterized in that** said outer casing (23) includes a second top wall (233) disposed above said first top wall (221) of said inner casing (22), and a second surrounding wall (234) extending downwards from a periphery of said second top wall (233) and surrounding said first surrounding wall (222) of said inner casing (22), said second surrounding wall (234) being disposed above said barrier wall (223) of said inner casing (22).

4. The burn-preventing grill unit (2) as claimed in any one of claims 2 and 3, further **characterized in that** said inner casing (22) further includes a heat-blocking rib (224) extending outwards from said barrier wall (223).

5. The burn-preventing grill unit (2) as claimed in claim 1, further **characterized in that** said outer casing (23) includes an outer casing body (231) spaced apart from said inner casing (22).

6. The burn-preventing grill unit (2) as claimed in claim 5, further **characterized in that** said outer casing body (231) and said inner casing (22) cooperatively form an air layer (230) therebetween.

7. The burn-preventing grill unit (2) as claimed in any one of claims 5 and 6, further **characterized in that** said outer casing (23) further includes a support block (232) extending from said outer casing body (231) and abutting against said inner casing (22).

8. A grill device including a grill base (1), and said burn-preventing grill unit (2) as claimed in anyone of Claims 1 to 7 that is connected pivotally to said grill base (1).
